# EUROPEAN PATENT APPLICATION

(11) **EP 1 502 831 A2**
(43) Date of publication of application: **02.02.2005**
(21) Application number: 04014450.3
(22) Date of filing: 21.06.2004
(51) Int. Cl.: B60S 9/06

(54) **Device for stabilizing vehicles during extended parking, particularly for large vehicles**

(30) Priority: 31.07.2003 IT PD20030172
(71) Applicant: POLITECNICA 80 S.p.A., 35010 Cadoneghe (Prov. of Padova) (IT)
(72) Inventor: Marin, Tarcisio, 35010 Vigodarzere (Prov. of Padova) (IT)
(74) Representative: Modiano, Guido, Dr.-Ing.

(57) **Abstract**

A device for stabilizing vehicles during extended parking, particularly for large vehicles such as campers, caravans, trucks, farming machines and vehicles, earth-moving machines, and the like, the device comprising a lifting jack (11), which is rotationally pivoted, by opposite ends, respectively to the chassis (12) of the vehicle to which it is applied and to a foot (13) for contact against a stabilization surface. The jack (11) comprises two identical and mutually opposite pairs of arms (16) that are mutually articulated by means of rotational hinges so as to form functionally an articulated quadrilateral (17). The articulated quadrilateral (17) comprises two first mutually opposite hinges (18), termed intermediate hinges, which are connected, by means of a translational actuator automated by means of a gearmotor (19), and two second hinges (20), which are respectively associated with the chassis (12) and with the contact foot (13). The device allows the vehicle to move, if it sets off accidentally without lifting the jack (11) from the contact surface; the jack (11) in fact rotates about its own hinge for coupling to the chassis (12), disengaging from the ground.

## Description

The present invention relates to a device for stabilizing vehicles during extended parking, particularly but not exclusively for large vehicles such as campers, caravans, trucks, farming machines and vehicles, earth-moving machines, and the like.

As it is known, most large vehicles have devices for stabilization during extended parking, which are particularly necessary when the terrain on which they are parked is not perfectly flat or in any case perfectly horizontal.

These devices are usually arranged at each wheel or at least at at least two coaxial wheels and are constituted by column-type jacks, which are fixed by one end to the chassis of the vehicle and are pivoted to a contact foot at the other end.

Although these devices have now been known and used for many years, they nonetheless have drawbacks.

A first drawback is that they are actuated manually, one jack at a time, with a considerable expenditure of energy and time in order to obtain an arrangement of the vehicle that is sufficiently level (i.e., substantially horizontal).

Another certainly more onerous drawback is that when the vehicle is parked with its traction wheels in contact with the ground, the driver often forgets that the jacks of the stabilization devices are lowered and so moves the vehicle, permanently bending (or even breaking off) the jacks, substantially damaging them severely.

The aim of the present invention is to provide a device for stabilizing vehicles during extended parking, particularly for large vehicles such as campers, caravans, trucks, farming machines and vehicles, earth-moving machines, and the like, that allows to solve the drawbacks noted in known types.

Within this aim, an object of the present invention is to provide a device for stabilizing vehicles during extended parking, particularly for large vehicles such as campers, caravans, trucks, farming machines and vehicles, earth-moving machines, and the like, that allows to move the vehicle to which it is applied without causing any damage.

Another object of the present invention is to provide a device for stabilizing vehicles during extended parking, particularly for large vehicles such as campers, caravans, trucks, farming machines and vehicles, earth-moving machines, and the like, that allows quick actuation and positioning.

Another object of the present invention is to provide a device for stabilizing vehicles during extended parking, particularly for large vehicles such as campers, caravans, trucks, farming machines and vehicles, earth-moving machines, and the like, that allows to level the vehicle simply and rapidly.

This aim and these and other objects that will become better apparent hereinafter are achieved by a device for stabilizing vehicles during extended parking, particularly for large vehicles such as campers, caravans, trucks, farming machines and vehicles, earth-moving machines, and the like, characterized in that it comprises a lifting jack that is rotationally pivoted, by opposite ends, respectively to the chassis of the vehicle to which said jack is applied and to a foot for contact against a stabilization surface.

Further characteristics and advantages of the present invention will become better apparent from the following detailed description of a preferred but not exclusive embodiment thereof, illustrated by way of nonlimiting example in the accompanying drawings, wherein:

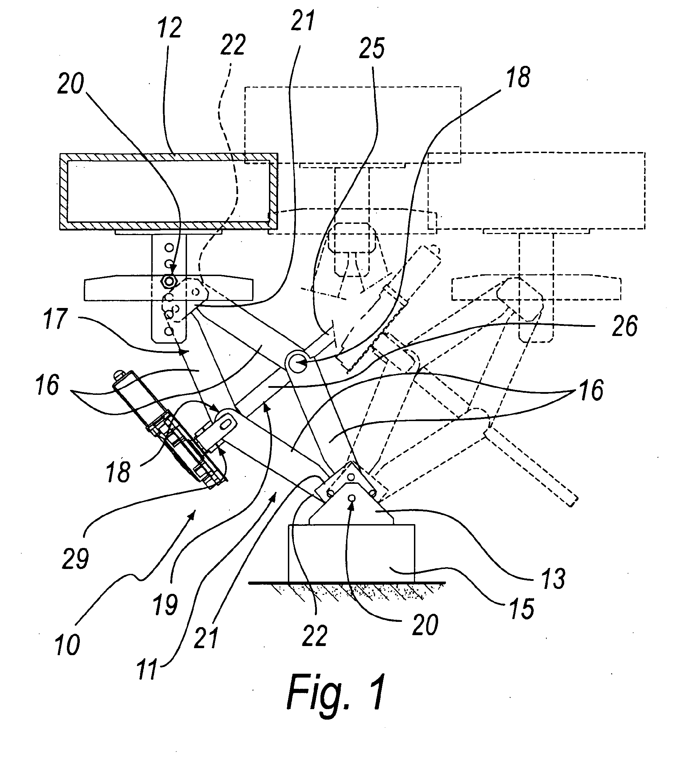

Figure 1 is a front view of the device according to the invention, illustrating three different possible positions that can be assumed by said jack that composes the device when it is in a fully lowered configuration;
Figure 2 is a front view of the device according to the invention, illustrating three different positions that can be assumed by said jack: fully raised (inactive step), fully lowered (active step for stabilizing the vehicle with which it is associated), and an intermediate position (lowering step);
Figure 3 is a front view of the device according to the invention, with said jack completely lowered, illustrating in an exploded view different embodiments of an actuation system of the jack.

With reference to the figures, a device for stabilizing vehicles during extended parking according to the invention is generally designated by the reference numeral 10.

The device 10 comprises a lifting jack 11, which is pivoted rotationally by opposite ends respectively to the chassis 12 of the vehicle to which it is applied (not shown for the sake of simplicity) and to a foot 13 for contact against a stabilization surface, such as for example the surface formed by a ground contact block 15.

In particular, the jack 11 comprises two identical and mutually opposite pairs of arms 16, which are mutually articulated by way of rotational hinges so as to form functionally an articulated quadrilateral 17.

The articulated quadrilateral 17 comprises two first mutually opposite hinges 18, termed intermediate hinges, which are connected by means of a translational actuator 19, described hereinafter, and two second hinges 20, which are respectively associated with the chassis 12 and with the contact foot 13.

In particular, the two second hinges 20 are formed on respective intermediate brackets 21, on which the free ends 22 of the pairs of articulated arms 16 are pivoted.

The intermediate brackets 21 are then pivoted respectively to the chassis 12 and to the supporting foot 13.

In particular, a bracket 23 for adjusting the pivoting height of the jack 11 with respect to the chassis 12 is monolithically fixed to the chassis.

The adjustment bracket 23 has a plurality of mutually alternative holes 24 for the pivoting of the jack 11.

The translational actuator 19 is constituted, in this embodiment, by a worm screw 25, which is coupled to a corresponding female thread 26, which is pivoted to a first one of the first intermediate hinges 18 and is freely coupled to a corresponding seat 27 formed at the second of the first intermediate hinges 18.

Advantageously, the translational actuator 19 is automated, since it comprises a gearmotor 28, the output shaft of which (not shown in the figures) is coupled to the worm screw 25.

The gearmotor 28 is fixed to the jack by way of a reversible coupling, designated here by the reference numeral 29.

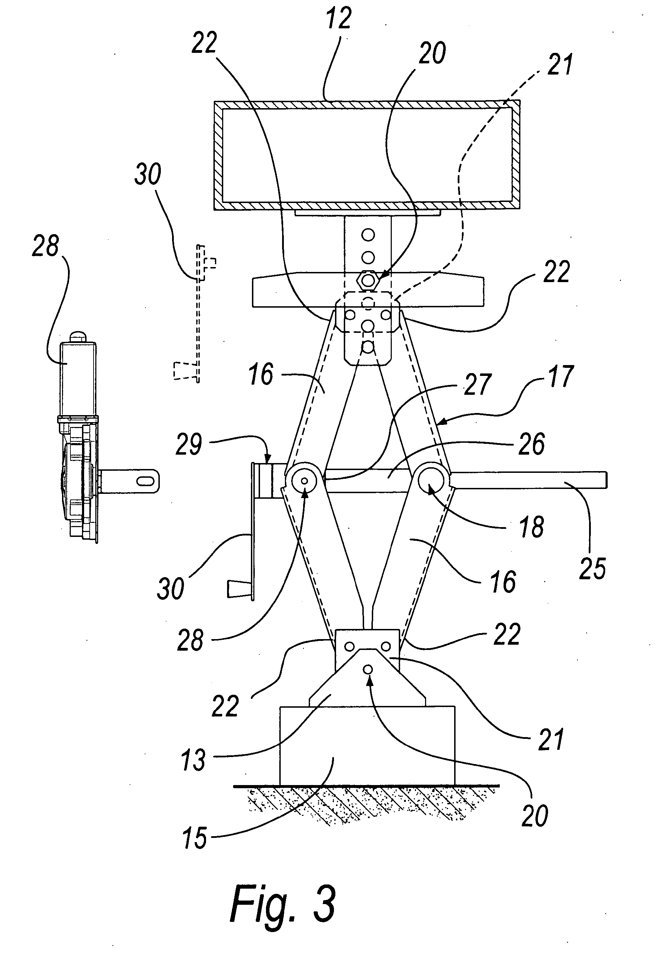

As shown in Figure 3, the gearmotor 28 can be uncoupled from the jack 11 and be replaced by an emergency crank 30. This allows to still actuate the device even if the gearmotor 28 does not work for any reason (damage, breakage, lack of electric power).

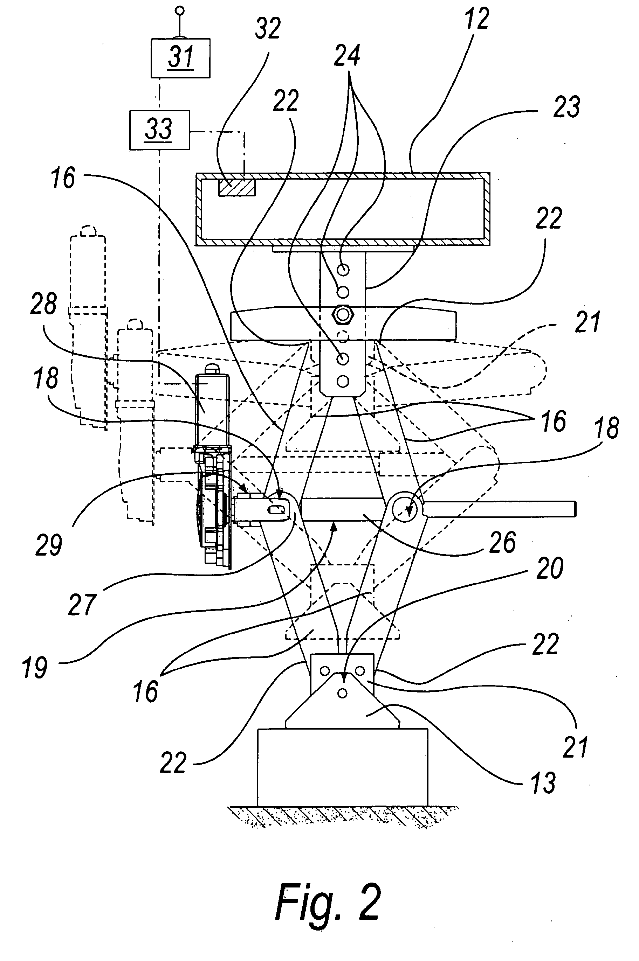

The gearmotor 28 is connected electrically to an actuation control (shown schematically and designated by the reference numeral 31 in Figure 2), which is available for example in the driver's cab of the vehicle with which the device 10 is arranged.

Conveniently, the gearmotor 28 is connected electrically also to a corresponding level sensor 32, which is arranged on the chassis at the device 10; the level sensor 32 and the gearmotor 28 are then functionally associated with an electronic control unit 33, which allows, by means of feedback controls, to arrange the vehicle substantially level in a fully automatic manner.

The operation of the invention is as follows.

A stabilization device 10 like the one according to the present invention is applied generally at each wheel of the vehicle with which it is associated (or at at least two coaxial wheels).

The lowering and lifting mechanism is substantially of a known type. Consider, for example, the jack when fully raised (as shown in dashed lines in Figure 2): by actuating the gearmotor 28, the gearmotor turns the worm screw 25, which allows to move mutually closer the mutually opposite pairs of articulated arms 16, thus producing the downward translational motion of the foot 13 until it rests against the contact block 15.

The advantage introduced by the invention is the fact that in addition to automating the upward and downward motion of the jack, if the vehicle starts moving accidentally without the jack being lifted first, the jack rotates about its own hinge that couples it to the chassis, disengaging itself from the ground and thus allowing the vehicle to move without damaging the jack (as occurs in conventional jacks).

In practice it has been found that the invention thus described solves the problems noted in conventional devices for stabilizing vehicles such as campers, caravans, trucks, farming machines and vehicles, earth-moving machines, and the like.

It should be noted that the fact of automating, by means of the gearmotor, the downward motion of the jack allows a considerable energy saving; moreover, the presence of the gearmotor in association with the level sensors allows to arrange the vehicle perfectly level in a fully automatic manner.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2003A000172 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for stabilizing vehicles during extended parking, particularly for large vehicles such as campers, caravans, trucks, farming machines and vehicles, earth-moving machines, and the like, **characterized in that** it comprises a lifting jack (11) that is rotationally pivoted, by opposite ends, respectively to the chassis (12) of the vehicle to which said jack is applied and to a foot (13) for contact against a stabilization surface.

2. The stabilization device according to claim 1, **characterized in that** said jack (11) is automated.

3. The stabilization device according to claim 1 or 2, **characterized in that** said jack (11) comprises two identical and mutually opposite pairs of arms (16), which are mutually articulated by way of rotational hinges so as to form functionally an articulated quadrilateral (17), which comprises two mutually opposite first hinges (18), termed intermediate hinges, which are connected by means of a translational actuator (19), and two second hinges (20), which are associated respectively with said chassis (12) and said contact foot (13).

4. The stabilization device according to claim 3, **characterized in that** said translational actuator (19) comprises a worm screw (25), which is coupled to a corresponding female thread (26) that is pivoted to a first one of said first intermediate hinges (18) and is freely coupled to a corresponding seat (27) that is formed at the second one of said first intermediate hinges (18), said device further comprising a reversible coupling (29) for the actuation of said translational actuator (19).

5. The stabilization device according to claim 4, **characterized in that** said actuator comprises a gearmotor (28), the output shaft of which is coupled to said worm screw.

6. The stabilization device according to claim 4, **characterized in that** said translational actuator (19) comprises an actuation crank (30).

7. The stabilization device according to claim 4, **characterized in that** a crank (30) for emergency actuation in replacement of said gearmotor (28) is fixed to said worm screw (25) by way of said reversible coupling (29).

8. The stabilization device according to one or more of the preceding claims, **characterized in that** said two mutually opposite second hinges (20) are formed on respective intermediate brackets (21), on which the free ends (22) of said pairs of articulated arms (16) are pivoted.

9. The stabilization device according to claim 8, **characterized in that** it comprises a bracket (23) for adjusting the height at which said jack (11) is pivoted to said chassis (12), said adjustment bracket (23) being fixed to said chassis (12) and having a plurality of mutually alternative pivoting holes (24).
